# EUROPÄISCHE PATENTSCHRIFT

(11) **EP 0 472 022 B1**
(45) Veröffentlichungstag und Bekanntmachung des Hinweises auf die Patenterteilung: **18.05.1994**
(21) Anmeldenummer: 91112932.8
(22) Anmeldetag: 01.08.1991
(51) Int. Cl.: E03C 1/04, F16L 37/08

(54) **Steckverbindung**
Plug connection
Raccordement à fiche

(30) Priorität: 24.08.1990 DE 4026816
(43) Veröffentlichungstag der Anmeldung: 26.02.1992
(73) Patentinhaber: FRIEDRICH GROHE AKTIENGESELLSCHAFT, D-58675 Hemer (DE)
(72) Erfinder: Humpert, Jürgen, W-5870 Hemer (DE); Derr, Max, W-5860 Iserlohn (DE)

(56) Entgegenhaltungen:
- DE-A- 1 800 604
- DE-U- 8 501 282
- GB-A- 1 077 599
- GB-A- 2 091 830

## Beschreibung

Die Erfindung betrifft eine Verbindung eines Rundstabes, Rohrs o.dgl. mit einem Gehäuse einer Sanitärarmatur, wobei der Rundstab oder das Rohr mit einem Steckteil in einer Bohrung des Gehäuses einführbar und wenigstens ein Dichtring sowie eine Rückzugssperre zur unlösbaren Sicherung in der Verbindungslage vorgesehen ist.
Eine derartige Verbindung ist aus der DE-U-85 01 282 bekannt. Hierbei ist der Steckteil einstückig mit einem Rastvorsprung versehen, der in einer mit Hilfe einer Hinterschneidung hergestellten Ausnehmung in der Bohrung der Armatur eingesprengt werden soll. Die Ausbildung der Ausnehmung in der Bohrungswandung bedingt eine radiale Ausweitung im Bereich der Verbindung. Außerdem ist es erforderlich, zur Herstellung der Ausnehmung Hinterschneidungen in der Bohrungswandung vorzunehmen, die in der Fertigung aufwendig sind und damit Kosten verursachen.
Ferner ist aus der DE-A-16 50 012 eine Überwurfmutterverschraubung mit einem Schneidring bekannt. Bei dieser Verbindungsform benötigt die Überwurfmutter jedoch relativ viel Raum, der häufig bei Anschlußverbindungen am Gehäuse, insbesondere bei Sanitärarmaturen mit Einsockelbefestigung, nicht vorhanden ist.
Es ist daher bereits aus der DE 38 11 357 Al bekannt, die Anschlußrohre in dem Batteriekörper mit einem Preßsitz nach der Fertigstellung der Armatur einzusetzen. Hierbei ist es jedoch erforderlich, daß enge Toleranzen im Anschlußbereich der Rohrleitungen und der Bohrungen im Gehäuse eingehalten werden. Darüber hinaus wird eine relativ aufwendige Einrichtung zum Tiefkühlen der einzusetzenden Rohrstücke benötigt.

Der Erfindung liegt die Aufgabe zugrunde, eine einfache und kostengünstig herzustellende, wenig Raum benötigende Steckverbindung zu schaffen, die eine im wesentlichen unlösbare Verbindung nach dem Zusammenfügen gewährleistet und die insbesondere für Steckteile aus Metall geeignet ist.
Diese Aufgabe wird erfindungsgemäß dadurch gelöst, daß in dem Steckteil eine ringförmige Ausnehmung ausgebildet ist, in der ein Schneidring als Rückzugssperre angeordnet ist, wobei die Ausnehmung einen kegelförmigen Grund aufweist, der sich im oberen Bereich der Ausnehmung befindet, derart, daß beim Herausziehen des Steckteils der Schneidring am kegelförmigen Grund anliegt, radial aufgeweitet wird und mit einer oder mehreren Schneidkanten sich in der Wandung einer Bohrung im Gehäuse verkrallt, so daß die Verbindung in der Stecklage verriegelt ist.
Weitere Ausgestaltungen der Erfindung sind in den Ansprüchen 2 bis 10 angegeben.

Die mit der Erfindung erzielbaren Vorteile bestehen insbesondere darin, daß die Steckverbindung ohne besondere Werkzeuge und Einrichtungen zu jeder Zeit zusammengefügt werden kann, worauf dann eine unlösbare Verbindung zwischen dem Gehäuse und dem Rundstab oder Rohr entsteht. Für die Verbindung wird kein größerer Raum benötigt als für das einzuführende Steckteil selbst.
Mit der erfindunggemäßen Steckverbindung kann insbesondere die Herstellung und Montage von sanitären Wassereinlochmischbatterien vereinfacht werden. Diese Armaturen sind in der Regel so ausgebildet, daß sie am Befestigungssockel zwei Kupferrohre mit einem Durchmesser von etwa 10mm aufweisen für den Anschluß an das Kalt- und Warmwasserleitungsnetz. Mit Hilfe der erfindungsgemäßen Steckverbindung kann hierbei die Herstellung und Oberflächenveredelung des Sanitärarmaturengehäuses ohne die relativ sperrigen Anschlußrohre aus Kupfer durchgeführt werden. Die Fertigmontage der Wasserleitungs-armatur ist ohne die sperrigen Kupferrohre einfacher durchzuführen. Außerdem sind kleinere Verpackungseinheiten für die Sanitärarmaturen ohne Kupferrohre möglich, wodurch weiterhin ein geringeres Lagervolumen und ein geringeres Transportvolumen erreicht wird. Schließlich ermöglicht die erfindungsgemäße Steckverbindung, daß die sanitäre Wasserarmatur zunächst ohne Kupferrohre auf dem Waschtisch oder Spültisch montiert wird und danach die Kupferröhrchen einfach in die Bohrungen des Sanitärarmaturenkörpers eingesteckt werden, wodurch dann eine unlösbare, dichte Verbindung herstellbar ist.

Ausführungsbeispiele der Erfindung sind in der Zeichnung dargestellt und werden im folgenden näher beschrieben. Es zeigt
- Figur 1: eine Steckverbindung eines Rundstabes mit einem Gehäuse im Längsschnitt;
- Figur 2: den Rundstab gemäß Figur 1 in Perspektivansicht mit einem einteiligen Schneidring;
- Figur 3: den Rundstab gemäß Figur 1 in Perspektivansicht mit einem zweiteiligen Schneidring;
- Figur 4: das Steckteil des Rundstabes gemäß Figur 1 in Perspektivansicht in vergrößerter Darstellung;
- Figur 5: den in den Figuren 1 und 2 gezeigten Schneidring in Perspektivansicht in vergrößerter Darstellung;
- Figur 6: den in Figur 3 dargestellten Schneidring in Perspektivansicht in vergrößerter Darstellung;
- Figur 7: eine sanitäre Einlochwassermischbatterie im Längsschnitt;
- Figur 8: das in Figur 7 dargestellte Kupferrohr in vergrößerter Darstellung teilweise geschnitten;
- Figur 9: den in Figur 7 dargestellten Schneidring in vergrößerter Darstellung;
- Figur 10: den in Figur 9 gezeigten Schneidring in Draufsicht.

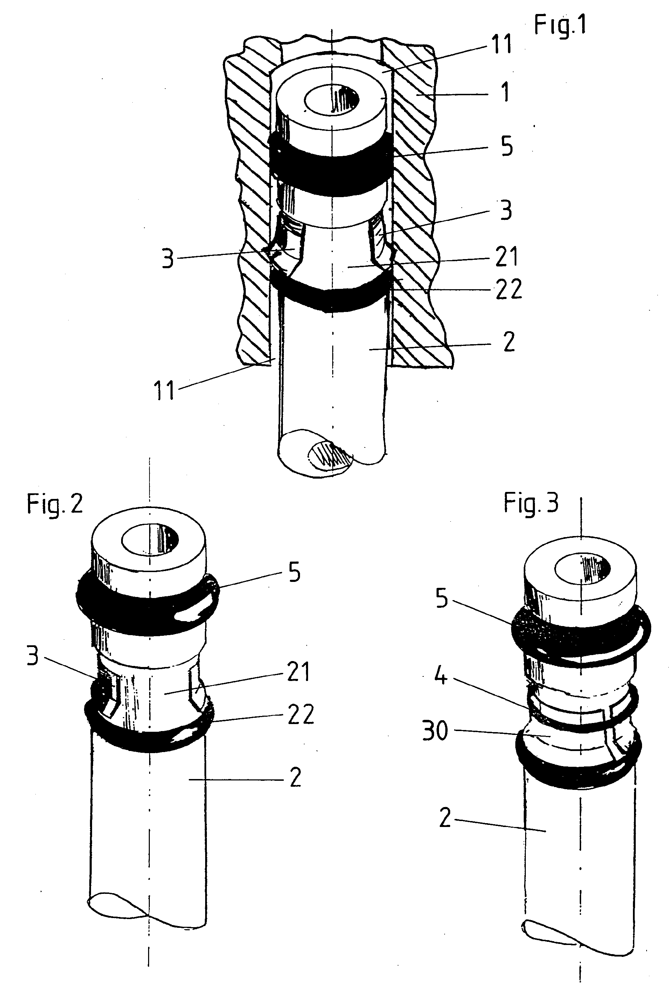

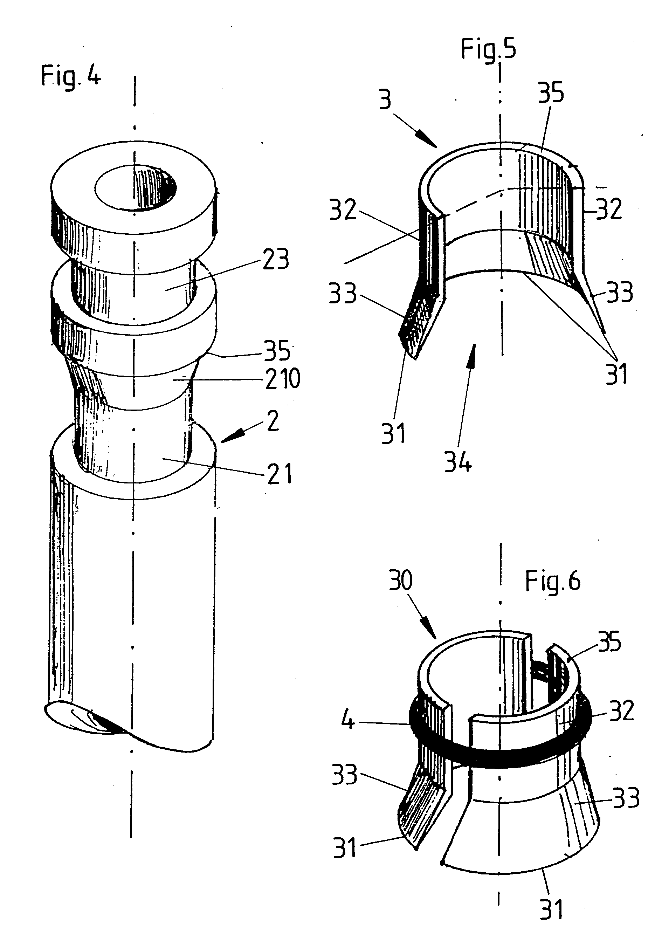

Der Einfachheit halber sind bei den Ausführungsbeispielen in der Zeichnung gleiche oder entsprechende Elemente mit jeweils gleichen Bezugszeichen versehen.
Die in den Figuren 1, 2, 4 und 5 gezeigte Steckverbindung wird von einem an einem Rundstab ausgebildeten Steckteil 2 und einem Schneidring 3 und einer in einem Gehäuse 1 angeordneten Bohrung 11 gebildet. Im Bereich der Spitze des Steckteils 2 ist zunächst eine Ringnut 23 für die Aufnahme eines Dichtrings 5 ausgebildet. Dahinter ist eine ringförmige Ausnehmung 21 oder Kehlung in der Mantelfläche des Steckteils 2 vorgesehen, wobei die Ausnehmung im oberen Bereich einen kegelförmigen Grund 210 aufweist, der an einer Anlageschulter 35 endet. Der Schneidring 3 ist, wie es insbesondere aus Figur 5 zu entnehmen ist, mit einem Längsschlitz 34 versehen. Dadurch kann der Schneidring 3 radial über die Ausnehmung 21 übergestreift werden. Der Längsschlitz 34 ist dabei so bemessen, daß beim Überstreifen eine geringe elastische Aufweitung erfolgt, so daß der Schneidring 3 nach dem Überstreifen unverlierbar von der Ausnehmung 21 des Steckteils 2 getragen wird. Der Schneidring 3 weist ferner einen etwa zylindrischen Bereich 32 und einen etwa konischen Bereich 33, an dessen äußeren Rand die Schneidkante 31 ausgebildet ist, auf.
Bevor der Schneidring 3 über den in Figur 4 gezeigten Steckteil 2 übergestreift wird, wird in der Ringnut 23 ein Dichtring 5 und im unteren Bereich der Ausnehmung 21 eine Elastomerfeder 22, z.B. Gummiring, eingelegt, wie es z.B. aus Figur 2 zu entnehmen ist. Wird nun der Schneidring 3 radial im Bereich der Ausnehmung 21 übergestreift, so erfährt der Schneidring 3 im Bereich der Schneidkante 31 durch die Elastomerfeder 22 eine radiale Aufweitung. Wird danach das Steckteil 2 gemäß Figur 2 in die Bohrung 11 des Gehäuses 1 eingeführt, so gelangt zunächst der Dichtring 5 im unbeschädigten Bereich der Wandung der Bohrung 11 zur sicheren Abdichtung. Danach wird der Schneidring 3 mit der Schneidkante 31 von der Elastomerfeder 22 gegen die Wandung der Bohrung 11 gedrückt. Nachdem das Steckteil 2 völlig in die Bohrung 11 eingeschoben worden ist, ist ein Herausziehen oder ein Herausschieben durch den anstehenden Fluiddruck nicht mehr möglich, da beim Herausziehen die Schneidkante 31 von der Elastomerfeder 22 und dem kegelförmigen Grund 210 in der Ausnehmung 21 radial in die Wandung der Bohrung 11 gedrückt wird und sich hier verkrallt, wie es aus Figur 1 der Zeichnung zu entnehmen ist. Mit der Elastomerfeder 22 kann zusätzlich noch eine Abdichtung zur Ausnehmung 21 und dem Schneidring 3 im Gehäuse 1 erfolgen.

Bei dem in Figur 3 und 6 gezeigten Ausführungsbeispiel ist anstatt eines einteiligen Schneidrings ein zweiteiliger Schneidring 30 vorgesehen. Die beiden Teile des Schneidrings 30 werden dabei von einem gummielastischen Ring 4 in der Ausnehmung 21 des Steckteils 2 gehalten. Im übrigen entspricht diese Ausführung dem ersten Ausführungsbeispiel.

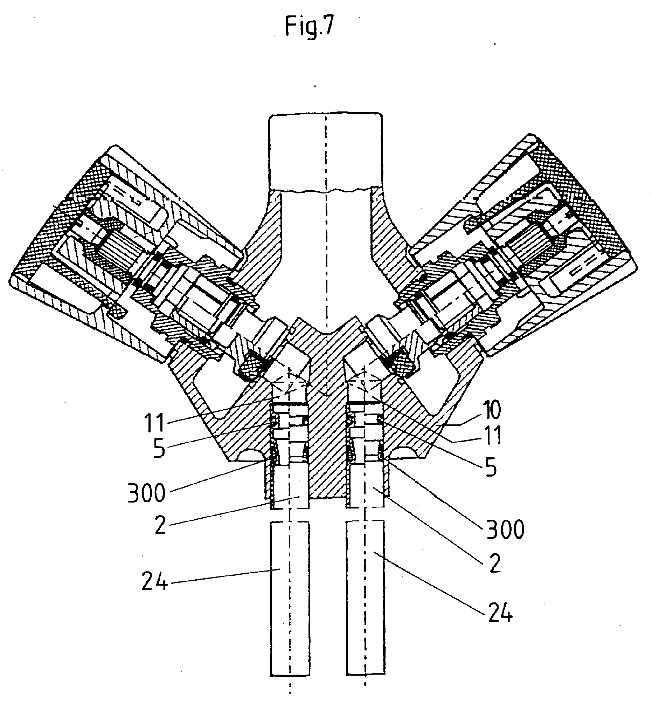

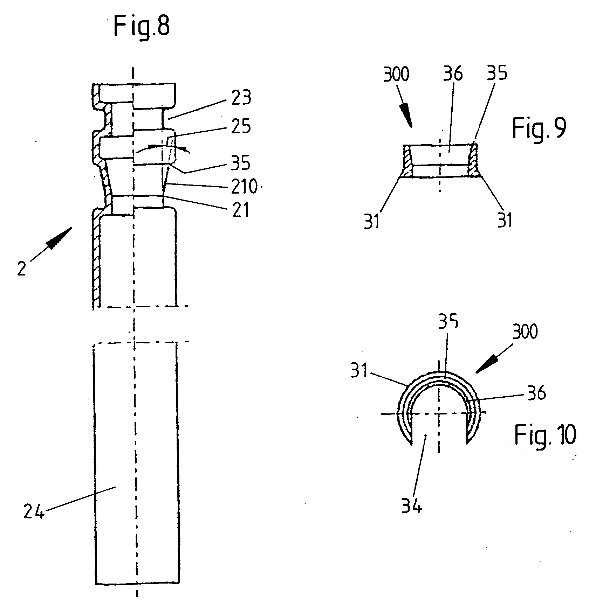

In den Figuren 7 bis 10 ist eine Verbindung von Kupferrohren von etwa 10mm Durchmesser mit einem Gehäuse 10 einer sanitären Einlochwassermischbatterie gezeigt. Die Kupferrohre 24 dienen dabei zum Anschluß an das Kalt- und Warmwasserversorgungsnetz und weisen jeweils ein Steckteil 2 auf. Am vorderen Bereich des Steckteils 2 ist jeweils ein Dichtring 5 zur Abdichtung zwischen der Wandung der Bohrung 11 und dem Steckteil 2 vorgesehen. Wie es insbesondere aus Figur 8 zu entnehmen ist, ist das Steckteil 2 durch spanlose Verformung (Sicken) mit einer Ringnut 23 und einer Ausnehmung 21 mit einem kegelförmigen Grund 210 versehen. Wie es insbesondere aus Figur 9 und 10 zu entnehmen ist, ist der Schneidring 300 einstückig mit einem Längsschlitz 34 zum Überstreifen über die Ausnehmung 21 ausgebildet. Der kegelförmige Grund 210 weist einen Winkel 25 von etwa 10° auf. In dem Schneidring 300 ist eine entsprechend ausgebildete konische Bohrung 36 vorgesehen, so daß nach dem Einstecken des Steckteils 2 in die Bohrung 11 des Gehäuses 10 nach einem Zurückziehen oder Zurückdrücken durch den Fluiddruck der Schneidring 300 radial aufgeweitet wird, wodurch die Schneidkante 31 in die Wandung der Bohrung 11 eindringt und ein Herausziehen oder -pressen des Steckteils 2 verhindert. Zweckmäßig ist der Durchmesser der Schneidkante 31 geringfügig größer als der Durchmesser der Bohrung 11, so daß er durch die elastische Federwirkung des Ringes gegen die Wandung der Bohrung 11 gepreßt wird.

Der Schneidring 3,30,300 kann vorteilhaft aus nichtrostendem Stahl hergestellt sein.

## Patentansprüche

1. Verbindung eines Rundstabes, Rohrs o.dgl. mit einem Gehäuse (1,10) einer Sanitärarmatur, wobei der Rundstab oder das Rohr mit einem Steckteil (2) in eine Bohrung des Gehäuses (1,10) einführbar und wenigstens ein Dichtring (5) sowie eine Rückzugssperre zur unlösbaren Sicherung in der Verbindungslage vorgesehen ist, dadurch gekennzeichnet, daß in dem Steckteil (2) eine ringförmige Ausnehmung (21) ausgebildet ist, in der ein Schneidring (3,30,300) als Rückzugssperre angeordnet ist, wobei die Ausnehmung (21) einen kegelförmigen Grund (210) aufweist, der sich im oberen Bereich der Ausnehmung (21) befindet, derart, daß beim Herausziehen des Steckteils (2) der Schneidring (3,30,300) am kegelförmigen Grund (210) anliegt, radial aufgeweitet wird und mit einer oder mehreren Schneidkanten (31) sich in der Wandung einer Bohrung (11) im Gehäuse (1,10) verkrallt, so daß die Verbindung in der Stecklage verriegelt ist.

2. Verbindung nach Anspruch 1, dadurch gekennzeichnet, daß der Schneidring (30) mehrteilig ausgebildet und die Teile von einem gummielastischen Ring (4) in der Ausnehmung (21) gehalten sind.

3. Verbindung nach Anspruch 1 oder 2, dadurch gekennzeichnet, daß der Schneidring (3,30) hülsenförmig ausgebildet ist und aus einem etwa zylindrisch geformten Bereich (32) mit einer Anlageschulter (35) für die Ausnehmung (21) und einem etwa konisch geformten Bereich (33) mit der Schneidkante (31) besteht.

4. Verbindung nach einem der Ansprüche 1 bis 3, dadurch gekennzeichnet, daß die einteilige Ausbildung des Schneidrings (3,300) einen Längsschlitz (34) aufweist, der so bemessen ist, daß der Schneidring (3,300) radial über die Ausnehmung (21) streifbar ist und in der Stecklage verharrt.

5. Verbindung nach einem der Ansprüche 1 bis 4, dadurch gekennzeichnet, daß in der Ausnehmung (21) am konisch geformten Bereich (33) des Schneidrings (3,30) eine Elastomerfeder (22) vorgesehen ist, die den Schneidring (3,30) mit der Schneidkante (31) gegen die Wandung der Bohrung (11) strammt.

6. Verbindung nach einem der Ansprüche 1 bis 5, dadurch gekennzeichnet, daß im Steckteil (2) in Einschiebrichtung vor der Ausnehmung (21) eine Ringnut (23) zur Aufnahme eines Dichtrings (5) vorgesehen ist, mit dem eine Abdichtung zwischen der Bohrung (11) und dem Steckteil (2) erfolgt.

7. Verbindung nach einem der Ansprüche 1 bis 6, dadurch gekennzeichnet, daß an dem kegelförmigen Grund (210) der Schneidring (3,30,300) mit einer entsprechend gestalteten konischen Bohrung (36) anliegt.

8. Verbindung nach wenigstens einem der Ansprüche 1 bis 7, dadurch gekennzeichnet, daß das Steckteil (2) an einem Rohr, insbesondere Kupferrohr (24), ausgebildet und für die Zuführung von Wasser zu einer Sanitärarmatur vorgesehen ist.

9. Verbindung nach einem der Ansprüche 1 bis 8, dadurch gekennzeichnet, daß die Ringnut (23) und die Ausnehmung (21) in dem Kupferrohr (24) durch spanlose Verformung, wie Sicken, hergestellt ist.

10. Verbindung nach einem der Ansprüche 1 bis 9, dadurch gekennzeichnet, daß der Schneidring (3,30, 300) aus nichtrostendem federndem Material, vorzugsweise gedreht oder aus Blech geformt, hergestellt ist.

## Claims

1. Connection of a round bar, pipe or the like to a housing (1, 10) of a sanitary fitting, the round bar or the pipe being able to be introduced with a plug-in part (2) into a bore in the housing (1, 10), and there being provided at least one sealing ring (5) as well as a retraction-preventing means for non-detachable securing in the connection position, characterised in that in the plug-in part (2) there is formed an annular recess (21) in which a cutting ring (3, 30, 300) is arranged as a retraction-preventing means, the recess (21) having a conical land (210) which is located in the upper region of the recess (21) such that when the plug-in part (2) is pulled out, the cutting ring (3, 30, 300) bears against the conical land (210), is radially widened out, and engages by means of one or more cutting edges (31) with the wall of a bore (11) in the housing (1, 10) in the manner of a claw so that the connection is locked in the inserted position.

2. Connection according to Claim 1, characterised in that the cutting ring (30) is of multi-part construction and the parts are held in the recess (21) by a rubbery elastic ring (4).

3. Connection according to Claim 1 or 2, characterised in that the cutting ring (3, 30) is sleeve-like in shape and consists of an approximately cylindrically shaped region (32) with a bearing shoulder (35) for the recess (21) and an approximately conically shaped region (33) with the cutting edge (31).

4. Connection according to one of Claims 1 to 3, characterised in that the one-part form of the cutting ring (3, 300) has a longitudinal slot (34) which is of such dimensions that the cutting ring (3, 300) is able to be slipped radially over the recess (21) and remains in the inserted position.

5. Connection according to one of Claims 1 to 4, characterised in that in the recess (21) on the conically shaped region (33) of the cutting ring (3, 30) an elastomeric spring (22) is provided which pulls the cutting ring (3, 30) with the cutting edge (31) tight against the wall of the bore (11).

6. Connection according to one of Claims 1 to 5, characterised in that in the plug-in part (2), before the recess (21) in the insertion direction, an annular groove (23) to receive a sealing ring (5) is provided with which sealing between the bore (11) and the plug-in part (2) is effected.

7. Connection according to one of Claims 1 to 6, characterised in that the cutting ring (3, 30, 300) bears against the conically shaped land (210) with a correspondingly shaped conical bore (36).

8. Connection according to at least one of Claims 1 to 7, characterised in that the plug-in part (2) is formed on a pipe, especially a copper pipe (24), and is provided for the supplying of water to a sanitary fitting.

9. Connection according to one of Claims 1 to 8, characterised in that the annular groove (23) and the recess (21) are produced in the copper pipe (24) by non-cutting shaping, such as crimping.

10. Connection according to one of Claims 1 to 9, characterised in that the cutting ring (3, 30, 300) is produced from corrosion-resistant resilient material, preferably machined or shaped from sheet-metal.

## Revendications

1. Liaison entre une tige ronde, un tube ou analogue et un corps (1, 10) d'un robinet sanitaire, la tige ronde ou le tube s'introduisant par une pièce enfichable (2) dans un perçage du corps (1, 10) et ayant au moins un joint d'étanchéité (5) ainsi qu'un moyen de blocage anti-retour pour une fixation indesserrable en position de liaison, liaison caractérisée en ce que dans la partie enfichable (2) il y a une cavité annulaire (21) ayant une bague coupante (3, 30, 300) comme moyen de blocage anti-retour et la cavité (21) présente un fond conique (210) dans la zone supérieure de la cavité (21) de façon que lorsqu'on tire sur la pièce enfichable (2), la bague coupante (3, 30, 300) s'applique contre le fond tronconique (210) et se déploie radialement en s'accrochant par une ou plusieurs arêtes de coupe (31) dans la paroi d'un perçage (11) du corps (1, 10) pour verrouiller la liaison en position enfichée.

2. Liaison selon la revendication 1, caractérisée en ce que la bague coupante (30) est en plusieurs parties maintenues dans la cavité (21) par une rondelle élastique (4).

3. Liaison selon la revendication 1 ou 2, caractérisée en ce que la bague coupante (3, 30) est en forme de douille et se compose d'une zone (32) de forme sensiblement cylindrique avec un épaulement d'appui (35) pour la cavité (21) et une zone (33) sensiblement conique avec une arête de coupe (31).

4. Liaison selon l'une des revendications 1 à 3, caractérisée en ce que la bague coupante (3, 300) réalisée en une seule pièce comporte une fente longitudinale (34) dimensionnée pour que la bague coupante (3, 300) puisse être passée radialement par-dessus la cavité (21) et reste bloquée en position enfichée.

5. Liaison selon l'une des revendications 1 à 4, caractérisée par un ressort en élastomère (22) prévu dans la cavité (21) de la zone de forme conique (33) de la bague coupante (3, 30), ce ressort serrant la bague coupante (3, 30) et son arête de coupe (31) contre la paroi du perçage (11).

6. Liaison selon l'une des revendications 1 à 5, caractérisée en ce que la partie enfichable (2) comporte, en amont de la cavité (21), selon la direction d'enfichage, une rainure annulaire (33) pour recevoir un joint d'étanchéité (5) qui assure l'étanchéité entre le perçage (11) et la pièce enfichable (2).

7. Liaison selon l'une des revendications 1 à 6, caractérisée en ce que la bague coupante (3, 30, 300) s'appuie, par un perçage (36) conique de forme correspondante, contre le fond conique (210).

8. Liaison selon l'une des revendications 1 à 7, caractérisée en ce que la pièce enfichable (2) est réalisée sur un tube, notamment un tube en cuivre (24) prévu pour l'alimentation en eau d'un robinet sanitaire.

9. Liaison selon l'une des revendications 1 à 8, caractérisée en ce que la rainure annulaire (23) et la cavité (21) sont réalisées dans le tube en cuivre (24) par une déformation sans enlèvement de copeaux comme par exemple des suages.

10. Liaison selon l'une des revendications 1 à 9, caractérisée en ce que la bague coupante (3, 30, 300) en un matériau élastique inoxydable, est fabriquée de préférence au tour ou par mise en forme d'une pièce en tôle.
